(19)

Europäisches
Patentamt
European
Patent Office
Office européen
des brevets

(11)     **EP 2 123 808 B1**

(12)                          **EUROPEAN PATENT SPECIFICATION**

(45) Date of publication and mention
of the grant of the patent:
**14.05.2014 Bulletin 2014/20**

(51) Int Cl.:
*D01F 9/127* (2006.01)          *B01J 23/88* (2006.01)
*B01J 27/232* (2006.01)         *C01B 31/02* (2006.01)

(21) Application number: **07851036.9**

(22) Date of filing: **21.12.2007**

(86) International application number:
**PCT/JP2007/074630**

(87) International publication number:
**WO 2008/075766 (26.06.2008 Gazette 2008/26)**

(54) **CARBON FIBER AND CATALYST FOR CARBON FIBER PRODUCTION**

CARBONFASER UND KATALYSATOR FÜR CARBONFASERHERSTELLUNG

FIBRE DE CARBONE, ET CATALYSEUR POUR UNE PRODUCTION DE FIBRE DE CARBONE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.12.2006 JP 2006345091**

(43) Date of publication of application:
**25.11.2009 Bulletin 2009/48**

(73) Proprietor: **Showa Denko K.K.
Tokyo 105-8518 (JP)**

(72) Inventors:
• **KITAZAKI, Akihiro
Tokyo 105-8518 (JP)**
• **KANBARA, Eiji
Tokyo 105-8518 (JP)**

(74) Representative: **Tack, Jens et al
Strehl Schübel-Hopf & Partner
Maximilianstrasse 54
80538 München (DE)**

(56) References cited:
WO-A1-00/58003          WO-A1-90/07023
JP-A- 2002 273 239      JP-A- 2006 083 494
JP-A- 2007 268 319      JP-A- 2007 314 391
JP-A- 2007 319 761      US-A1- 2006 057 055

• **HUANG W ET AL: "99.9% purity multi-walled
carbon nanotubes by vacuum high-temperature
annealing", CARBON, ELSEVIER, OXFORD, GB,
vol. 41, no. 13, 1 January 2003 (2003-01-01), pages
2585-2590, XP004458787, ISSN: 0008-6223, DOI:
10.1016/S0008-6223(03)00330-0**

Remarks:
The file contains technical information submitted after
the application was filed and not included in this
specification

EP 2 123 808 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### TECHNICAL FIELD

The present invention relates to a carbon fiber and to a composite material comprising the carbon fiber. In more detail, the present invention relates to a carbon fiber which can be used as a filler to improve electric conductivity or thermal conductivity by being added to a material such as metals, resins, ceramics and the like, as an electron emission material for field emission display (FED), as a carrier of a catalyst for various chemical reactions, as a medium to absorb and store hydrogen, methane or various gases, and as an electrode material for an electrochemical element such as batteries, capacitors or the like.

### BACKGROUND ART

In the past, well known manufacturing methods for producing carbon fiber include a carbonization method of organic fibers such as synthetic fibers, petroleum pitch fibers and the like, and a vapor grown method by thermal decomposition of a carbon source, for example, a hydrocarbon such as benzene, methane and the like, in the vapor phase, in the presence of a catalyst to give a carbon fiber.
Various studies on manufacturing methods of a carbon fiber by the vapor grown method have been carried out since the late 1980's and have made various proposals for the catalysts that can be used.
For example, Patent Literature 1 discloses a catalyst obtained by coprecipitation which comprises a catalyst metal consisting of iron or a combination of iron and molybdenum, and alumina or magnesia. It was demonstrated that this catalyst could yield carbon fibers with an impurity level of a catalyst metal at 1.1 % by weight or less and an impurity level of a catalyst carrier at 5 % by weight or less.
Patent Literature 2 discloses a catalyst comprising Fe and at least one element selected from the group consisting of V, Nb, Ta, Cr, Mo, W, Mn, Tc and Re. Patent Literature 2 specifically discloses a catalyst which was obtained by an impregnation method in which a metal which is a combination of Fe and Mo, Fe and Cr, Fe and Ce, Fe and Mn, or the like is supported on a carrier.
Patent Literature 3 discloses a catalyst obtained by coprecipitation which comprises a catalyst metal consisting of a combination of Mn, Co and Mo or a combination of Mn and Co supported on alumina or magnesia. Moreover, Patent Literature 4 also discloses a catalyst comprising nickel, chromium, molybdenum and iron or comprising cobalt, yttrium, nickel and copper.
Patent Literature 5 demonstrates carbon fiber obtained by a fluid vapor grown method, in which the amount of elements other than carbon was 0.3 to 0.7 % by mass and the amount of transition metal elements was 0.1 to 0.2 %.

Patent Literature 1: Japanese Patent Laid Open 2003-205239
Patent Literature 2: US Patent 5,707,916
Patent Literature 3: International Publication WO2006/50903
Patent Literature 4: US Patent 6,518,218
Patent Literature 5: Japanese Patent Laid Open 2001-80913

### DISCLOSURE OF THE INVENTION

### PROBLEMS TO BE SOLVED BY THE INVENTION

However, production of a catalyst by the coprecipitation method disclosed in Patent Literature 1 or 3 is known to be poor in efficiency and high in cost. The obtained carbon fiber is also relatively low in electric conductivity. The carbon fiber obtained using the catalyst in Patent Literature 2 contains a high amount of impurities and may lower the mechanical strength of a resin composite material when the carbon fiber is used as a filler for the resin. Productivity is low by the method in Patent Literature 4 since the metals described above are supported on a carrier by a sputtering method and the like. The method according to Patent Literature 5 is high in producing cost since a high temperature reaction field is usually required. Acid washing is usually carried out as a method to reduce the amount of impurities in carbon fiber, but the resulting increase in the number of steps results in high producing cost.
Thus, in the conventional methods, it was difficult to produce a carbon fiber at low cost in which impurities are reduced while keeping high thermal conductivity and high electric conductivity.
An object of the present invention is to provide a catalyst for production of a carbon fiber capable of efficiently manufacturing carbon fiber low in impurities. Another object of the present invention is to provide a carbon fiber high in electric conductivity and thermal conductivity, and excellent in dispersibility when the carbon fiber is filled into a resin and the like.

**MEANS FOR SOLVING THE PROBLEMS**

The present inventors have earnestly studied to achieve the above objects and found that a carbon fiber which has a low amount of impurities other than carbon is obtained by a vapor grown method using a catalyst for manufacture of a carbon fiber obtained by dissolving or dispersing in a solvent a compound containing (I) Fe or Co, a compound containing (II) Ti, V or Cr, and a compound containing (III) W or Mo to obtain a solution or a fluid dispersion, mixing the solution or the fluid dispersion with a carrier to obtain a mixture, and drying the mixture. The present inventors have also found that the carbon fiber is excellent in dispersibility when filled into a resin and the like, and electric conductivity and thermal conductivity of the resin composite material can be kept high. The present invention has been accomplished based on these findings and further researches.

That is, the present invention includes the following embodiments.

(1) A carbon fiber containing a catalyst, in which the catalyst comprises a combination of the elements Fe-V-Mo, Fe-Ti-Mo, Fe-Cr-W, Fe-V-W, Fe-Ti-W or Co-Cr-Mo supported on a carrier.

(2) The carbon fiber according to (1) above, wherein the amount of elements other than carbon is 10 % by mass or less and the amount of transition metal elements is 2.5 % by mass or less.

(3) The carbon fiber according to (1) or (2) above, wherein the diameter of the fiber is not less than 5 nm and not more than 100 nm.

(4) The carbon fiber according to (1) to (3) above, wherein the carbon fiber is tube-shaped.

(5) The carbon fiber according to (1) to (4) above, wherein the carbon fiber contains a graphite layer, and the length of the graphite layer is not less than 0.02 times and not more than 15 times the diameter of the fiber.

(6) The carbon fiber according to (1) to (5) above, wherein the carbon fiber contains a graphite layer, and the amount of the graphite layer having a length of less than twice the diameter of the fiber is not less than 30 % and not more than 90 %.

(7) The carbon fiber according to (1) to (6) above, wherein the carbon fiber has an R value in Raman spectroscopy analysis of 0.9 or less.

(8) The carbon fiber according to any one of (1) to (7) above, wherein the carbon fiber is heat-treated at a temperature of 2000 to 3500 °C.

(9) A composite material comprising the carbon fiber according to (1) to (8) above.

**ADVANTAGEOUS EFFECTS OF INVENTION**

Vapor growing by thermal decomposition of a carbon source in the presence of a catalyst for producing the carbon fiber of the present invention can give a carbon fiber low in the amount of impurities other than carbon, low in the amount of transition metal elements and low in the residual amount of a carrier, at low cost using a simple process.

The carbon fiber of the present invention can be uniformly dispersed when filled in a resin and the like, permitting the resin composite material to maintain high thermal conductivity and high electric conductivity. Impurities in the carbon fiber of the present invention are significantly reduced even by a low cost process, and a composite material obtained after their addition to metals resins, ceramics and the like does not result in lowering of the strength. Furthermore, the carbon fiber of the present invention can be suitable for use as an electron emission material for field emission display (FED), as a carrier of catalyst for various reactions, as a medium to absorb and store hydrogen, methane or various gases and as an electrode material for an electrochemical element such as batteries, capacitors or the like.

**BEST MODE FOR CARRYING OUT THE INVENTION**

The present invention is described in detail as follows.

The carbon fiber in the present invention contains element (I), element (II) and element (III) derived from a catalyst. Containing a combination of these three elements results in uniformly dispersing the fiber when the fiber is filled in a resin and the like, and the fiber enables the resin composite material to maintain a high thermal conductivity and high electric conductivity. The amount of impurities in the carbon fiber can be significantly reduced so that addition of the carbon fiber of the present invention to a resin and the like does not cause lowering of the strength of the resin and the like. The element (I), the element (II) and the element (III) in the carbon fiber of the present invention mean elements derived from a catalyst (specifically a substance supported on the catalyst carrier) to the exclusion of the elements derived from a catalyst carrier, though some catalyst carriers may contain the element (I), the element (II) or the element (III).

The element (I) is Fe or Co.

The element (II) is Ti, V or Cr. V is particularly preferable from the standpoint of productivity. Since Cr can have a plurality of oxidation numbers of divalent, tetravalent and hexavalent, when Cr is used, the oxidation number has to be adjusted during catalyst preparation, complicating the catalyst preparation process. On the other hand, Ti is preferable, because it is stable at the oxidation number of tetravalent, does not require special control as described above, a complicated method of catalyst preparation is not required and catalyst performance is stable.

The element (III) is W or Mo.

Elements (I), (II), and (III) are used in the specific combinations defined in the claims.

Regarding the proportion of each element in the carbon fiber, the element (II) and the element (III) each relative to the mols of the element (I) are usually 1 to 100 % by mol, preferably 5 to 50 % by mol, particularly preferably 5 to 20 % by mol. When the proportion of the element (II) and the element (III) each meets the above range, carbon fibers low in the amount of impurities other than carbon, low in the amount of transition metal elements and low in the residual amount of a carrier are likely to be obtained. The total amount of the element (II) and the element (III) is further preferably 30 % by mol or less relative to the mols of the element (I).

In a combination of Fe-V-Mo, V is preferably 10 % by mol to 20 % by mol and Mo is preferably 5 % by mol to 10 % by mol relative to the mols of Fe.

The carbon fiber of the present invention may contain elements derived from a catalyst carrier in addition to the element (I), the element (II) and the element (III) described above. For example, such elements include Al derived from alumina and the like, Zr derived from zirconia and the like, Ti derived from titania and the like, Mg derived from magnesia and the like, Ca derived from calcium carbonate, calcium oxide, calcium hydroxide and the like, and Si derived from silica, diatomaceous earth and the like. The elements derived from such catalyst carriers are usually 0.1 to 100 times, preferably 0.5 to 10 times the total mass of the element (I), the element (II) and the element (III) derived from the above catalyst metal. The amount of the elements derived from the carrier is also usually 5 % by mass or less, preferably 3 % by mass or less, more preferably 2 % by mass or less, particularly preferably 1 % by mass or less relative to the mass of the carbon fiber.

The amount of elements other than carbon in the carbon fiber of the present invention is usually 10 % by mass or less, preferably 5 % by mass or less, more preferably 3 % by mass or less, particularly preferably 2 % by mass or less, relative to the mass of the carbon fiber.

The amount of transition metal elements (sum of the element (I), the element (II) and the element (III)) in the carbon fiber derived from the catalyst metal is also usually 2.5 % by mass or less, preferably 1.5 % by mass or less, more preferably 1.0 % by mass or less, particularly preferably 0.5 % by mass or less of the mass of the carbon fiber.

The amount of the element (I) in the carbon fiber is also usually 2 % by mass or less, preferably 1.3 % by mass or less, more preferably 0.8 % by mass or less, particularly preferably 0.4 % by mass or less.

The amount of the element (II) in the carbon fiber is usually 0.4 % by mass or less, preferably 0.25 % by mass or less, more preferably 0.15 % by mass or less, particularly preferably 0.08 % by mass or less.

The amount of the element (III) in the carbon fiber is usually 0.4 % by mass or less, preferably 0.25 % by mass or less, more preferably 0.15 % by mass or less, particularly preferably 0.08 % by mass or less.

The amount of impurities or the amount of transition metals in the carbon fiber of the present invention is controlled to such a low level that the carbon fiber can be uniformly dispersed when filled in a resin and the like to substantially increase thermal conductivity and electric conductivity. Lowering of the mechanical strength of the resin and the like is prevented even if the carbon fiber is added in a large amount.

The carbon fiber in a preferred embodiment of the present invention has an R value in Raman spectroscopy analysis of usually 0.9 or less, preferably 0.7 or less.

An R value means an intensity ratio $I_D/I_G$ of a peak intensity ($I_D$) near 1360 cm$^{-1}$ to a peak intensity ($I_G$) near 1580 cm$^{-1}$ observed in a Raman spectrum. The R value was measured under a condition of excitation wavelength at 532 nm using a Raman spectrometer Series 5000 manufactured by Kaiser Optical Systems, Inc. The lower this R value is, the higher a growth level of a graphite layer in the carbon fibers is indicated. When the carbon fiber is filled in a resin and the like, wherein the R value of the carbon fiber meets the above range, thermal conductivity and electric conductivity of the resin and the like become higher.

The carbon fiber in a preferred embodiment of the present invention usually has a fiber diameter of 5 nm to 100 nm, preferably 5 nm to 70 nm, more preferably 5 nm to 50 nm. The aspect ratio of the carbon fiber is usually 5 to 1,000.

The carbon fiber in a preferred embodiment of the present invention usually is tubular having a hollow space at the center of the fiber. The hollow space may be continuous or discontinuous in the longitudinal direction of the fiber. The ratio (do/d) of the hollow space diameter do to the carbon fiber diameter d is not particularly limited, but usually is 0.1 to 0.8.

In a preferred embodiment of the present invention, the carbon fiber has a graphite layer that is nearly parallel to the longitudinal direction of the carbon fiber. The length of the graphite layer is usually from 0.02 to 15 times the diameter of the fiber. The shorter the length of the graphite layer is, adhesion strength between the carbon fibers and a resin becomes higher when the carbon fiber is filled in a resin and the like, thus increasing the mechanical strength of a composite made from the carbon fibers and a resin. The length of the graphite layer can be determined by observation of an electron micrograph and the like.

The carbon fiber in a preferred embodiment of the present invention has a graphite layer having a length shorter than twice the diameter of the fiber in an amount preferably of 30 % to 90 %. The amount of the graphite layer is determined by the same manner as described in Patent literature 2.

A tubular carbon fiber in a preferred embodiment of the present invention preferably has a multilayered shell surrounding the hollow space. Specifically, it is preferable that an inner layer of the shell is composed of crystalline carbon, while an outer layer is preferably composed of carbon containing a pyrolysis layer. Such a multilayered shell increases adhesion strength between the carbon fiber and a resin when the carbon fiber is filled in a resin and the like, thereby increasing the mechanical strength of a composite made from the resin and the carbon fiber. The carbon fiber having such a multilayered shell is described in detail in an article of A. Oberlin, et al. entitled with "Filamentous growth of carbon through benzene decomposition" (J. Crystal Growth, 32, 335-49 (1976)). The carbon fiber having such a multilayered shell is composed of a section of graphite layers orderly aligned parallel each other and a section of graphite layers shrunk and aligned disorderly.

When a layer comprising a disordered arrangement of carbon atoms is thick, fiber strength is likely to be weak, whereas when it is thin, interfacial strength with a resin is likely to be weak. Presence of a layer comprising a disordered arrangement of carbon atoms (disordered graphite layer) having a proper thickness or a mixed presence (distribution) of both a thick disordered graphite layer and a thin disordered graphite layer in a single fiber is beneficial in order to have high fiber strength and enhance interfacial strength with a resin.

The carbon fiber in the present invention can be obtained by a manufacturing method comprising a step of contacting a carbon source in a vapor phase with a catalyst for manufacture of a carbon fiber of the present invention described hereinafter.

A catalyst for manufacture of the carbon fiber in the present invention is one comprising element (I), element (II) and element (III). A combination of these three kinds of elements can yield a carbon fiber at low cost and with impurities which are significantly reduced. In the present invention, the element (I), the element (II) and the element (III) means elements derived from a catalyst (specifically a substance supported on the catalyst carrier) to the exclusion of the elements derived from a catalyst carrier, though some catalyst carrier may contain the element (I), the element (II) and the element (III).

The element (I) is Fe or Co.

The element (II) is Ti, V or Cr. V is particularly preferable from the standpoint of productivity. Since Cr can have a plurality of oxidation numbers of divalent, tetravalent and hexavalent, when Cr is used, the oxidation number has to be adjusted during catalyst preparation, complicating the catalyst preparation process. On the other hand, Ti is preferable, because it is stable at the oxidation number of tetravalent, does not require special control as described above, and a complicated method of catalyst preparation is not required and catalyst performance is stable.

The element (III) is W or Mo.

Regarding the proportion of each element, the element (II) and the element (III) each is usually 1 to 100 % by mol, preferably 5 to 50 % by mol, particularly preferably 5 to 20 % by mol relative to the mols of the element (I). When the proportion of the element (II) and the element (III) each meets the above range, carbon fibers low in the amount of impurities other than carbon, low in the amount of transition metal elements and low in the residual amount of a carrier are likely to be obtained.

The catalyst for manufacture of the carbon fibers in the present invention is one in which the element (I), the element (II) and the element (III) described above are supported on a carrier.

The carrier that is used is preferably one that is stable in the heating temperature range, and inorganic oxides and inorganic carbonates are usually used. For example, carriers include alumina, zirconia, titania, magnesia, calcium carbonate, calcium hydroxide, calcium oxide, strontium oxide, barium oxide, zinc oxide, strontium carbonate, barium carbonate, silica, diatomaceous earth, zeolite and the like. Among them, alumina, magnesia, titania, calcium carbonate, calcium hydroxide or calcium oxide is preferable from the standpoint of reducing the amount of impurities. Transition alumina is preferably used as alumina. Calcium containing compounds such as calcium carbonate, calcium hydroxide or calcium oxide are preferable from the standpoint of increasing thermal conductivity.

The total amount of the element (I), the element (II) and the element (III) supported on a carrier is generally 1 to 100 % by mass, preferably 3 to 50 % by mass, more preferably 5 to 30 % by mass relative to the mass of the carrier. When the supported amount is too high, the manufacturing cost is increased and the amount of impurities is likely to increase.

The method for preparing the catalyst for manufacturing the carbon fiber of the present invention is not particularly limited, but it is preferable to prepare the catalyst by an impregnation method. An impregnation method is a method in which a catalyst is obtained by mixing a liquid containing a catalyst metal element with a carrier and drying the mixture.

Specifically, a compound containing (I) Fe or Co, a compound containing (II) Ti, V or Cr and a compound containing (III) W or Mo are dissolved or dispersed in a solvent, and the resulting solution or fluid dispersion is mixed with a carrier, and then the mixture is dried to give the catalyst for manufacturing the carbon fiber of the present invention.

The liquid containing the catalyst metal element may be a liquid organic compound comprising the catalyst metal element, or a liquid in which a compound containing the catalyst metal element is dissolved or dispersed in an organic solvent or water. A dispersant or surfactant (preferably cationic surfactant or anionic surfactant) may be added to the liquid containing the catalyst metal element in order to improve dispersibility of the catalyst metal element. The each amount of dispersant or surfactant is preferably 0.1 to 50 % by mass.

The concentration of the catalyst metal element in the liquid containing the catalyst metal element can be properly selected according to the kinds of solvents, catalyst metals and the like. The volume of the solution or dispersion that is mixed with the carrier preferably corresponds to the water absorbing capacity of the carrier that is used.

Drying after sufficiently mixing the liquid containing the catalyst metal element with the carrier is usually carried out at 70 to 150 °C. Vacuum drying may also be used in drying. After drying, crushing and classifying into a proper size may be preferably carried out.

A carbon source used in the manufacturing method of the carbon fiber in the present invention includes, but is not particularly limited to, organic compounds such as, for example, methane, ethane, propane, butene, isobutene, butadiene, ethylene, propylene, acetylene, benzene, toluene, xylene, methanol, ethanol, propanol, naphthalene, anthracene, cyclopentane, cyclohexane, cumene, ethylbenzene, formaldehyde, acetaldehyde, acetone and the like, or carbon monoxide and the like. These can be used alone or in combination of two or more. Volatile oil, paraffin oil and the like may also be employed as a carbon source. Among them, methane, ethane, ethylene, acetylene, benzene, toluene, methanol, ethanol and carbon monoxide are preferable, and methane, ethane and ethylene are particularly preferable.

Contacting the catalyst with the carbon source in a vapor state can be similarly carried out by a conventionally known vapor-grown method.

For example, there is a method, in which the catalyst is placed in a vertical or horizontal reactor heated to a desired temperature and the carbon source is fed with a carrier gas into the reactor.

The catalyst may be placed in the reactor in the form of a fixed bed in which the catalyst is placed on a boat (for example, a quartz boat) in the reactor, or placed in a reactor in the form of a fluidized bed in which the catalyst is fluidized with a carrier gas in the reactor. The catalyst can be reduced by circulating only carrier gas before feeding the carbon source, since a surface of the catalyst may be possibly oxidized with oxygen in air, steam and the like.

A reducing gas such as hydrogen and the like is usually employed as a carrier gas. The amount of carrier gas is properly selected according to the reaction process, and is usually 0.1 to 70 parts by mole relative to 1 part by mole of the carbon source. An inert gas such as nitrogen gas and the like may be simultaneously employed in addition to a reducing gas. An atmosphere of the gas in the reactor may also be changed during the process of the reaction.

The reactor temperature is usually 500 to 1,000 °C, preferably 550 to 750 °C.

Such a method allows pyrolysis of the carbon source in the reactor to grow the decomposed carbon source into a fiber form using the catalyst as a nucleator, yielding the carbon fiber of the present invention.

The obtained carbon fiber may be heat-treated under an inert gas atmosphere such as helium, argon and the like, for example, at 2,000 to 3,500 °C. The heat treatment may have been carried out at a high temperature of 2,000 to 3,500 °C since the beginning, or may be carried out in stepwise elevation of the temperature. In the heat treatment by stepwise temperature elevation, a first step is usually carried out at 800 to 1,500 °C and a second step is usually carried out at 2,000 to 3,500 °C.

The carbon fiber of the present invention can be contained in a matrix such as resins, metals, ceramics and the like to form a composite material to improve electric conductivity and thermal conductivity of the resins, metals, ceramics and the like, since the carbon fiber has high electric conductivity, high thermal conductivity and the like. In particular, when the carbon fiber is compounded with a resin to form a composite material, one half to one third (mass ratio) or less of the amount added can be used as compared with the amount added of conventional carbon fibers, and can demonstrate the same electric conductivity, yielding an excellent effect. Specifically, a resin/carbon fiber composite used in antistatic applications and the like requires addition of 5 to 15 % by mass of conventional carbon fiber in order to obtain a desired electric conductivity and the like. On the other hand, when the carbon fiber in the present invention is used, blending with 0.1 to 8 % by mass of the carbon fiber in the present invention can generate sufficient electric conductivity. When blended with a metal, breaking strength can also be improved.

Ceramics, to which the carbon fibers of the present invention can be added, include, for example, aluminum oxide, mullite, silicon oxide, zirconium oxide, silicon carbide, silicon nitride and the like.

Metals to which the carbon fibers of the present invention can be added include gold, silver, aluminum, iron, magnesium, lead, copper, tungsten, titanium, niobium, hafnium and alloys and mixtures thereof. The amount of the carbon fiber is usually 5 to 15 % by mass to the ceramics or the metals.

Either of thermoplastic resins or thermosetting resins can be used as a matrix resin to disperse the carbon fibers of the present invention.

Thermosetting resins can be used alone or in combination of two or more selected from the group consisting of, for example, phenol resin, unsaturated polyester resin, epoxy resin, vinylester resin, alkyd resin, acrylic resin, melamine resin, xylene resin, guanamine resin, diallylphthalate resin, allylester resin, furan resin, imide resin, urethane resin and urea resin.

Thermoplastic resins may be, for example, in addition to polyesters such as polyethylene terephthalate (PET), polybutylene terephthalate (PBT), polytrimethylene terephthalate (PTT), polyethylene naphthalate (PEN), liquid crystal polyester (LCP) and the like; polyolefins such as polyethylene (PE), polypropylene (PP), polybutene-1 (PB-1), polybutylene and the like; and styrene-based resins; polyoxymethylene (POM), polyamide (PA), polycarbonate (PC), polymethyl methacrylate (PMMA), polyvinyl chloride (PVC), polyphenylene ether (PPE), polyphenylene sulfide (PPS), polyimide (PI), polyamideimide (PAI), polyetherimide (PEI), polysulfone (PSU), polyethersulfone, polyketone (PK), polyether ketone (PEK), polyetherether ketone (PEEK), polyether ketone ketone (PEKK), polyarylate (PAR), polyethernitrile (PEN); fluoro resins such as polytetrafluoroethylene (PTFE) and the like, as well as thermoplastic elastomers such as polystyrene-based thermoplastic elastomer, polyolefin-based thermoplastic elastomer, polyurethane-based thermoplastic elastomer, polyester-based thermoplastic elastomer, polyamide-based thermoplastic elastomer, polybutadiene-based thermoplastic elastomer, polyisoprene-based thermoplastic elastomer or fluoro thermoplastic elastomer, copolymers and denatured products thereof and resins blended in two kinds or more.

Other elastomer or rubber components can be further added to the above thermoplastic resins to improve impact resistance. The elastomers used to improve impact properties usually include olefin-based elastomers such as EPR and EPDM, styrene-based elastomers such as SBR comprising a styrene and butadiene copolymer and the like, silicone-based elastomers, nitrile-based elastomers, butadiene-based elastomers, urethane-based elastomers, nylon-based elastomers, ester-based elastomers, fluoro elastomers, natural rubbers and denatured products, of which a reactive site (double bond, carboxylic anhydride groups and the like) is introduced into the elastomers thereof.

Other various additives can be blended into the resin composition, in which carbon fibers of the present invention are dispersed, within a range not to impair performance and function of the resin composition. The additives include, for example, colorants, plasticizers, lubricants, heat stabilizers, light stabilizers, UV light absorbers, fillers, foaming agents, flame retardants, rust-proof agents and the like. Such various additives are preferably blended in a final step in preparation of the resin composition.

Blending and kneading each component composing the resin composition, in which carbon fibers of the present invention are dispersed, are preferably carried out to avoid carbon fibers from breaking as much as possible. Specifically, the amount of broken fibers in the carbon fibers is preferably controlled at 20 % or less, more preferably controlled at 15 % or less, particularly preferably controlled at 10 % or less. The amount of broken fibers is evaluated by comparing the aspect ratios of the carbon fibers before and after blending and kneading (for example, measured by observation of scanning electron microscopy (SEM)). For example, the following methods can be employed in order to blend and knead while preventing the carbon fibers from breaking as much as possible. The amount of broken fibers is determined as the following calculating formula :

$$\text{The amount of broken fibers } (\%) =$$
$$(1 - (\text{the aspect ratio of the carbon fiber in the resin composition}) /$$
$$(\text{the aspect ratio of the carbon fiber before blending and kneading}))$$
$$\times 100$$

When a thermoplastic resin or thermosetting resin is melted to knead with inorganic fillers, high shear is usually applied to coagulated inorganic fillers to crush them into finer particles to uniformly disperse the fillers in the molten resin. When the amount of shear during the kneading is low, the inorganic fillers are not sufficiently dispersed in the molten resin, and there is not obtained a resin composite material with desired performance and function. Many kneaders are used which generate a high shear force, utilizing a mechanism of a stone mill or by installing kneading discs for applying high shear into screw elements in a co-rotatory twin-screw extruder. However, when carbon fibers are kneaded with a resin, application of excess high shear to the resin and carbon fibers results in the breaking of the carbon fibers, and as a result there is obtained a resin composite material that does not have the anticipated performance and function. On the other hand, when a single-screw extruder with weak shear force is used, carbon fibers can be prevented from breaking, but then the carbon fibers are not uniformly dispersed. Accordingly, in order to uniformly disperse carbon fibers while preventing the carbon fiber from breaking, it is preferable that a co-rotatory twin-screw extruder not using kneading discs is employed to reduce shear, or a device which does not apply high shear such as a pressurized kneader is employed for kneading over a long period being usually 10 to 20 minutes, or special mixing elements in a single-screw extruder are used for kneading.

Wettability between the molten resin and carbon fibers is also important in order to disperse the carbon fibers in the resin. Improvement of wettability increases the area corresponding to an interface between the molten resin and the carbon fibers. One method to improve wettability, for example, is a method of oxidatively treating the surface of the carbon fibers.

The bulk density of the carbon fiber in the present invention is usually 0.02 to 0.2 g/cm$^3$. A carbon fiber having such a bulk density is fluffy and likely to trap air so that degassing by a conventional single-screw extruder or co-rotatory twin-screw extruder is difficult and causes difficulty in filling the carbon fiber in the resin. A batch-type pressurized kneader is therefore preferable as a kneader which is good in filling and preventing the carbon fibers from breaking as much as possible. A molten product obtained by kneading with a batch pressurized kneader may be fed into a single-screw extruder to be pelletized. In addition, for example, a reciprocating single-screw extruder (Ko-Kneader manufactured by Coperion Buss Compounding Systems AG) can be used as an extruder capable of degassing a large volume of air trapped in the carbon fibers and capable of producing carbon fibers that have a high filling.

A resin composite material comprising the carbon fiber in the present invention is suitable for use as a molded material in products and parts demanding high impact resistance as well as electric conductivity and antistatic properties, for example, parts used in office automation (OA) equipment and electronics, parts for electrically conductible packaging, parts for antistatic packaging, parts for automobiles and the like. More specifically, a resin composite material comprising the carbon fiber of the present invention can be employed in seamless belts that are excellent in durability, heat resistance and surface flatness and stable in electric resistance properties used in a photoreceptor, a charging belt, a transferring belt, fixing belt and the like in image forming equipment such as electrophotographic copiers, laser printers and the like; in trays and cassettes that are excellent in heat resistance and antistatic properties used in processing, washing, transporting and storing of hard disks, hard disk heads and various semiconductor parts; and in materials of automotive parts for electrostatic coating and fuel tubes for automobiles. Hard disks, hard disk heads and various semiconductors are little contaminated with metal ions emanating from the carbon fibers when they are transported in trays and cassettes manufactured from the resin composite material containing the carbon fibers in the present invention, since the carbon fibers contain a very low level of metal impurities derived from a catalyst.

A conventionally known molding method for a resin composition can be used to manufacture these products. A suitable molding method includes, for example, injection molding, blow molding, extrusion, sheet forming, thermoforming, rotational molding, laminate molding, transfer molding and the like.

The carbon fibers in the present invention can be used in bundling or twisting to form a filament or spinning into staples to form a yarn, knitting filaments and yarns described above, converting to paper by a wet or dry process, converting to a non-woven fabric or woven fabric and converting sheet-shaped prepreg by impregnating with a resin.

Applications or uses for such carbon fibers can be developed in the fields of aerospace, sports, industrial materials and the like. The aerospace field includes use in primary structural materials for airplane such as main planes, tail planes, fuselages and the like, secondary structural materials for airplane such as ailerons, rudders, elevators and the like, interior trim parts for airplane such as floor panels, beams, lavatories, seats, and the like, nozzle cones and motor cases for rocket and the like, antennas for satellite, solar battery panels and tubular truss structural materials and the like. The field of sports includes use in fishing rods and reels for fishing equipments, shafts, heads, face plates and shoes for golf, rackets for tennis, badminton, squash and the like, frames, wheels and handles for bicycle, masts for yacht, yacht, cruiser and boat, baseball bats, skis, ski stocks, bamboo swords for kendo, Japanese bows, Western bows, radio-controlled cars, table tennis, billiard, sticks for ice hockey and the like. The field of industrial materials includes use in propeller shafts for automobiles, racing cars, compression natural gas (CNG) tanks, spoilers, bonnets for automobile, cowls and muffler covers for two-wheeled motor vehicle, railcars, linear motor car bodies and seats, machine parts such as fiber parts, disc springs, robot arms, bearings, gears, cams, bearing retainers and the like, rapidly spinning bodies such as rotors for centrifugal machine, uranium concentrating columns, flywheels, rollers for industrial use, shafts and the like, electronic and electrical parts such as parabola antennas, acoustic speakers, video tape recorder (VTR) parts, compact disc (CD) parts, integrated circuit (IC) carriers, housings for electronic equipments, electrodes for electrochemical element such as batteries, capacitors and the like, blades and nacelles for wind power generation, pressured vessels such as hydraulic cylinders, steel cylinders and the like, drilling machines for offshore oil such as risers and tethers, chemical equipment such as agitation blades, pipes, tanks and the like, medical devices such as wheelchairs, parts for surgery, X-ray grids, catheters and the like, materials for civil engineering and construction such as cables, concrete reinforcing materials and the like, office equipment such as bearings for printer, cams, housings and the like, precision equipment such as camera parts, plant parts and the like, corrosion resistant equipment such as pump parts and the like and other materials such as electrically conductive materials, heat insulation materials, slipping materials, heat resistant materials, antistatic sheets, dies for resin molding, umbrellas, helmets, planar sheet heating elements, eyeglass frames, corrosion resistant filters and the like.

## EXAMPLES

Typical examples are illustrated below to explain the present invention in detail.

Properties used in the following examples were measured with the following methods.

[Amount of Impurities]

Measurement of the amount of impurities was carried out at a high frequency output of 1,200 W with a measurement time of 5 seconds using a CCD multi-element simultaneous ICP atomic emission spectrometer (VISTA-PRO manufactured by VARIAN Inc.).

In a quartz beaker, 0.1 g of a sample was weighed precisely and decomposed with sulphonitric acid. After cooling, the mixture was diluted to an exact volume of 50 ml. This solution was properly diluted to quantify each element by the ICP-atomic emission spectrometer (AES). In the tables, the mass of impurities relative to the mass of the carbon fiber are shown. The impurities include the catalyst career, and the elements (I), (II), and (III) of the catalyst metal.

[Volume Resistance]

Carbon fibers and a cycloolefin polymer (ZEONOR 1420 R manufactured by Zeon Corporation) were weighed and the weighed amounts were adjusted to provide a total weight of 48 g and a given concentration of the carbon fiber being 3 % or 5 %. The adjusted weighed carbon fibers and cycloolefin polymer were kneaded with a laboratory mixer Labo Plastomil (Model 30C150 manufactured by Toyo Seiki Seisakusho Co., Ltd.) at a temperature of 270 °C and 80 rpm for 10 minutes to obtain a composite material. This composite material was heat-pressed at a temperature of 280 °C and 50 MPa for 60 seconds to prepare a flat plate with a size of 100 mm $\times$ 100 mm $\times$ 2 mm. The concentration of the carbon fiber is determined as mass of the carbon fiber based on mass of the composite material.

The volume resistance of the above flat plate was measured by a four-point probe method using a volume resistivity meter (Rolesta MCPT-410 manufactured by Mitsubishi Chemical Corporation) according to JIS-K7194.

[Thermal Conductivity]

The composite material having the carbon fiber concentration of 5 % by mass obtained in the measurement of volume resistance described above was heat-pressed at a temperature of 280 °C and 50 MPa for 60 seconds to prepare four flat plates with a size of 20 mm $\times$ 20 mm $\times$ 2 mm.

Measurement of thermal conductivity was carried out by a hot disc method using Hot Disk TPS 2500 manufactured by Keithley Instruments, Ltd.

A set was prepared from two plates and a sensor was sandwiched between two sets of plates, to which a constant current was passed to generate a certain amount of heat, and thermal conductivity was determined from the temperature rise observed by the sensor.

[Weight Gain]

A weight gain was represented by the ratio of the mass of carbon fibers obtained to the mass of the catalyst used (= mass of carbon fibers / mass of catalyst).

Example 1 (Fe - Ti(10) - Mo(10) / Alumina)

To 0.95 part by mass of methanol, 1.81 parts by mass of iron (III) nitrate nona-hydrate was added and dissolved therein, to which 0.109 part by mass of titanium (IV) tetra-n-butoxide tetramer and 0.079 part by mass of hexaammonium heptamolybdate tetrahydrate were then added and dissolved therein to obtain solution A.

The solution A was added dropwise to 1 part by mass of a transition alumina (AKP-G015 manufactured by Sumitomo Chemical Co., Ltd.) and mixed therein. After mixing, the mixture was dried under vacuum at 100 °C for 4 hours. After drying, the residue was crushed in a mortar with a pestle to yield a catalyst. The catalyst contained 10 % by mol of Mo and 10 % by mol of Ti relative to the mols of Fe, and the amount of Fe supported on the transition alumina was 25 % by mass relative to the mass of the transition alumina.

The catalyst was weighed and placed on a quartz boat, which was inserted into a tube reactor made from quartz and the reactor was sealed. The inside atmosphere of the tube reactor was replaced with nitrogen gas to raise the temperature of the reactor from ambient temperature to 690 °C over 60 minutes while passing the nitrogen gas through the reactor. The reactor was kept at 690 °C for 30 minutes while passing nitrogen through the reactor.

The nitrogen gas was switched to a mixed gas A comprising nitrogen gas (100 parts by volume) and hydrogen gas (400 parts by volume) and the mixed gas A was passed through the reactor to perform a reduction reaction for 30 minutes while keeping the temperature at 690 °C. After the reduction reaction, mixed gas A was switched to a mixed gas B comprising hydrogen gas (250 parts by volume) and ethylene gas (250 parts by volume) which was passed through the reactor to perform a vapor growing reaction for 60 minutes. Mixed gas B was switched to nitrogen gas to replace the inside atmosphere of the reactor with nitrogen to cool to ambient temperature. The reactor was opened and the quartz boat was taken out. Carbon fibers grown from the catalyst as a nucleator were obtained. These carbon fibers were tubular in shape and their formed shell had a multilayered wall. Evaluation results of the carbon fibers are shown in Table 1.

Example 2 (Fe - V(10) - Mo(10) / Alumina)

To 1.2 parts by mass of water, 1.81 parts by mass of iron (III) nitrate nona-hydrate was added and dissolved therein, to which 0.052 part by mass of ammonium metavanadate and 0.079 part by mass of hexaammonium heptamolybdate tetrahydrate were then added and dissolved therein, yielding solution A.

The solution A was added dropwise to 1 part by mass of transition alumina (AKP-G015 manufactured by Sumitomo Chemical Co., Ltd.) and mixed therein. After mixing, the mixture was dried under vacuum at 100 °C for 4 hours. After drying, the residue was crushed in a mortar with a pestle to yield a catalyst. The catalyst contained 10 % by mol of Mo and 10 % by mol of V relative to the moles of Fe, and the amount of Fe supported on the transition alumina was 25% by mass relative to the mass of the transition alumina.

The catalyst was weighed and was placed on a quartz boat, which was inserted into a tube reactor made from quartz and the reactor was sealed. The inside atmosphere of the tube reactor was replaced with nitrogen gas to raise the temperature of the reactor from ambient temperature to 690 °C over 60 minutes while passing the nitrogen gas through the reactor. The reactor was kept at 690 °C for 30 minutes while the nitrogen was passed therethrough.

The nitrogen gas was switched to a mixed gas A comprising nitrogen gas (100 parts by volume) and hydrogen gas (400 parts by volume) and the mixed gas A was passed through the reactor to perform a reduction reaction for 30 minutes while keeping the temperature at 690 °C. After the reduction reaction, mixed gas A was switched to a mixed gas B comprising hydrogen gas (250 parts by volume) and ethylene gas (250 parts by volume) which was passed through the reactor to perform a vapor growing reaction for 60 minutes. Mixed gas B was switched to nitrogen gas to replace the inside atmosphere of the reactor with nitrogen gas to cool to ambient temperature. The reactor was opened and the quartz boat was taken out. Carbon fibers grown from the catalyst as a nucleator were obtained. These carbon fibers were tubular in shape and their formed shell had a multilayered wall. Evaluation results of the carbon fibers are shown in Table 1.

Example 3 (Fe - Cr(10) - Mo(10) /Alumina) (Reference only)

A catalyst was similarly obtained as in Example 2, except that 0.179 part by mass of chromium (III) nitrate nona-hydrate was used instead of ammonium metavanadate. The catalyst contained 10 % by mol of Mo and 10 % by mol of Cr relative to the mols of Fe, and the amount of supported Fe was 25 % by mass relative to the mass of the transition alumina (AKP-G015 manufactured by Sumitomo Chemical Industry Co., Ltd.).

Carbon fibers were similarly obtained as in Example 2 using the catalyst of this Example. The carbon fibers were tubular in shape and their formed shell had a multilayered wall. Evaluation results of the carbon fibers are shown in Table 1.

Example 4 (Fe - Ti(10) - W(10) / Alumina)

A catalyst was similarly obtained as in Example 1, except that 0.110 part by mass of ammonium metatungstate hydrate was used instead of hexaammonium heptamolybdate tetrahydrate. The catalyst contained 10 % by mol of W and 10 % by mol of Ti relative to the mols of Fe, and the amount of supported Fe was 25 % by mass relative to the mass of the transition alumina (AKP-G015 manufactured by Sumitomo Chemical Industry Co., Ltd.).

Carbon fibers were similarly obtained as in Example 1 using the catalyst of this Example. The carbon fibers were tubular in shape and their formed shell had a multilayered wall. Evaluation results of the obtained carbon fibers are shown in Table 1.

Example 5 (Fe - V(10) - W(10) / Alumina)

A catalyst was similarly obtained as in Example 2, except that 0.110 part by mass of ammonium metatungstate hydrate was used instead of hexaammonium heptamolybdate tetrahydrate. The catalyst contained 10 % by mol of W and 10 % by mol of V relative to the mols of Fe, and the amount of supported Fe was 25 % by mass relative to the mass of the transition alumina (AKP-G015 manufactured by Sumitomo Chemical Industry Co., Ltd.).

Carbon fibers were similarly obtained as in Example 2 using the catalyst of this Example. The carbon fibers were tubular in shape and their formed shell had a multilayered wall. Evaluation results of the obtained carbon fibers are shown in Table 1.

Example 6 (Fe - Cr(10) - W(10) /Alumina)

A catalyst was similarly obtained as in Example 3, except that 0.110 part by mass of ammonium metatungstate hydrate was used instead of hexaammonium heptamolybdate tetrahydrate. The catalyst contained 10 % by mol of W and 10 % by mol of Cr relative to the mols of Fe, and the amount of supported Fe was 25% by mass relative to the mass of the transition alumina (AKP-G015 manufactured by Sumitomo Chemical Industry Co., Ltd.).
Carbon fibers were obtained similarly as in Example 3 using the catalyst of this Example. The carbon fibers were tubular in shape and their formed shell had a multilayered wall. Evaluation results of the obtained carbon fibers are shown in Table 1.

Comparative Example 1 (Fe - Mo(10) / Alumina)

A catalyst was similarly obtained as in Example 2, except that ammonium metavanadate was not used. The catalyst contained 10 % by mol of Mo relative to the mols of Fe, and the amount of supported Fe was 25 % by mass relative to the mass of the transition alumina (AKP-G015 manufactured by Sumitomo Chemical Industry Co., Ltd.).
Carbon fibers were similarly obtained as in Example 2 using the catalyst of this Comparative Example. Evaluation results are shown in Table 1.

Comparative Example 2 (Fe - W(10) / Alumina)

A catalyst was similarly obtained as in Example 5, except that ammonium metavanadate was not used. The catalyst contained 10 % by mol of W relative to the mols of Fe, and the amount of supported Fe was 25 % by mass relative to the mass of the alumina (AKP-G015 manufactured by Sumitomo Chemical Industry Co., Ltd.).
Carbon fibers were similarly obtained as in Example 5 using the catalyst of this Comparative Example. Evaluation results are shown in Table 1.
[Table 1]

Table 1

| | | Ex. | | | Comp. Ex. | Ex. | | | Comp. Ex. |
|---|---|---|---|---|---|---|---|---|---|
| | | 1 | 2 | 3* | 1 | 4 | 5 | 6 | 2 |
| Element(I) | | Fe | Fe | Fe | Fe | Fe | Fe | Fe | Fe |
| Element(II) | | Ti | V | Cr | - | Ti | V | Cr | - |
| Element(III) | | Mo | Mo | Mo | Mo | W | W | W | W |
| Carrier | | Alumina | Alumina | Alumina | Alumina | Alumina | Alumina | Alumina | Alumina |
| Weight gain (Times) | | 31.0 | 50.0 | 34.0 | 17.0 | 19.0 | 34.0 | 18.0 | 15.0 |
| Volume resistance ($\Omega$cm) | | | | | | | | | |
| | 3% | $2.1\times10^1$ | $2.9\times10^2$ | $5.1\times10^0$ | $1.1\times10^2$ | $8.3\times10^0$ | $4.0\times10^2$ | $1.4\times10^1$ | $3.8\times10^1$ |
| | 5% | $1.0\times10^0$ | $1.2\times10^1$ | $3.0\times10^0$ | $3.6\times10^1$ | $5.1\times10^0$ | $1.8\times10^1$ | $8.2\times10^0$ | $2.2\times10^1$ |
| Amount of impurities (%) | | | | | | | | | |
| | Elements other than carbon | 2.8 | 1.8 | 2.6 | 5.1 | 4.7 | 2.7 | 5.0 | 5.9 |
| | Element(I), (II)and(III) | 0.7 | 0.4 | 0.6 | 1.1 | 1.2 | 0.7 | 1.3 | 1.5 |
| | Carrier | 2.2 | 1.3 | 2.0 | 3.9 | 3.5 | 2.0 | 3.7 | 4.4 |
| * Reference only | | | | | | | | | |

As shown in Table 1, carbon fibers of the present invention obtained in Examples 1-6 using the three component catalysts of Fe as the element (I), Ti, V or Cr as the element (II) and Mo or W as the element (III) supported on alumina carrier had a lower amount of impurities and generally lower values of volume resistance as compared with carbon fibers obtained in Comparative Examples 1 and 2 using the two component catalyst comprising a combination of Fe and Mo or a combination of Fe and W supported on alumina.

Comparative Example 3 (Fe -Ti(10) /Alumina)

A catalyst was similarly obtained as in Example 1, except that hexaammonium heptamolybdate tetrahydrate was not used. The catalyst contained 10 % by mol of Ti relative to the mols of Fe, and the amount of transition supported Fe was 25 % by mass relative to the mass of the alumina (AKP-G015 manufactured by Sumitomo Chemical Industry Co., Ltd.).
Carbon fibers were similarly obtained as in Example 1 using the catalyst of this Comparative Example. Evaluation results are shown in Table 2.

Comparative Example 4 (Fe - V(10) /Alumina)

A catalyst was similarly obtained as in Example 2, except that hexaammonium heptamolybdate tetrahydrate was not used. The catalyst contained 10 % by mol of V relative to the mols of Fe, and the amount of supported Fe was 25 % by mass relative to the mass of the transition alumina (AKP-G015 manufactured by Sumitomo Chemical Industry Co., Ltd.).
Carbon fibers were similarly obtained as in Example 2 using the catalyst of this Comparative Example. Evaluation results are shown in Table 2.

Comparative Example 5 (Fe - Cr(10) / Alumina)

A catalyst was similarly obtained as in Example 3, except that hexaammonium heptamolybdate tetrahydrate was not used. The catalyst contained 10 % by mol of Cr relative to the mols of Fe, and the amount of supported Fe was 25 % by mass relative to the mass of the transition alumina (AKP-G015 manufactured by Sumitomo Chemical Industry Co., Ltd.).
Carbon fibers were obtained similarly as in Example 3 using the catalyst of this Comparative Example. Evaluation results are shown in Table 2.

Comparative Example 6 (Fe - Mo(10) -W (10) /Alumina)

A catalyst was similarly obtained as in Example 2, except that 0.110 part by mass of ammonium metatungstate hydrate was used instead of ammonium metavanadate. The catalyst contained 10 % by mol of Mo and 10 % by mol of W relative to the mols of Fe, and the amount of supported Fe was 25 % by mass relative to the mass of the transition alumina (AKP-G015 manufactured by Sumitomo Chemical Industry Co., Ltd.).
Carbon fibers were similarly obtained as in Example 2 using the catalyst of this Comparative Example. Evaluation results are shown in Table 2.

Comparative Example 7 (Fe - Ti(10) - V(10) /Alumina)

A catalyst was similarly obtained as in Example 1, except that 0.052 part by mass of ammonium metavanadate was used instead of hexaammonium heptamolybdate tetrahydrate. The catalyst contained 10 % by mol of Ti and 10 % by mol of V relative to the mols of Fe, and the amount of supported Fe was 25 % by mass relative to the mass of the alumina (AKP-G015 manufactured by Sumitomo Chemical Industry Co., Ltd.).
Carbon fibers were similarly obtained as in Example 1 using the catalyst of this Comparative Example. Evaluation results are shown in Table 2.

Comparative Example 8 (Fe - Ti(10) - Cr(10) /Alumina)

A catalyst was similarly obtained as in Example 1, except that 0.179 part by mass of chromium (III) nitrate nona-hydrate was used instead of hexaammonium heptamolybdate tetrahydrate. The catalyst contained 10 % by mol of Ti and 10 % by mol of Cr relative to the mols of Fe, and the amount of supported Fe was 25 % by mass relative to the mass of the transition alumina (AKP-G015 manufactured by Sumitomo Chemical Industry Co., Ltd.).
Carbon fibers were obtained similarly as in Example 1 using the catalyst of this Comparative Example. Evaluation results are shown in Table 2.

Comparative Example 9 (Fe - V(10) - Cr(10) /Alumina)

A catalyst was similarly obtained as in Example 3, except that 0.052 part by mass of ammonium metavanadate was used instead of hexaammonium heptamolybdate tetrahydrate. The catalyst contained 10 % by mol of V and 10 % by mol of Cr relative to the mols of Fe, and the amount of supported Fe was 25 % by mass relative to the mass of the transition alumina (AKP-G015 manufactured by Sumitomo Chemical Industry Co., Ltd.).
Carbon fibers were similarly obtained as in Example 3 using the catalyst of this Comparative Example. Evaluation results are shown in Table 2.
[Table 2]

Table 2

|  |  | Comp. Ex. | | | | | | |
|---|---|---|---|---|---|---|---|---|
|  |  | 3 | 4 | 5 | 6 | 7 | 8 | 9 |
| Element(I) | | Fe | Fe | Fe | Fe | Fe | Fe | Fe |
| Element(II) | | Ti | V | Cr | - | Ti,V | Ti,Cr | V,Cr |
| Element(III) | | - | - | - | W,Mo | - | - | - |
| Carrier | | Alumina | Alumina | Alumina | Alumina | Alumina | Alumina | Alumina |
| Weight gain (Times) | | 15.0 | 26.0 | 8.0 | 16.0 | 25.0 | 14.0 | 13.0 |
| Amount of impurities (%) | | | | | | | | |
|  | Elements other than carbon | 5.7 | 3.3 | 10.6 | 5.7 | 3.5 | 6.2 | 6.6 |
|  | Elements(I), (II)and(III) | 1.2 | 0.8 | 2.3 | 1.6 | 0.8 | 1.4 | 1.5 |
|  | Carrier | 4.4 | 2.6 | 8.3 | 4.2 | 2.7 | 4.8 | 5.1 |

From the results in Table 2, it can be seen that the amount of impurities in the carbon fibers of the present invention obtained using the three component catalyst comprising Fe as a main component supported on the alumina is drastically reduced as compared with the carbon fibers obtained using the two component catalyst comprising Fe as a main component supported on the alumina. For example, this is clearly found by comparing Example 2 (elements other than carbon: 1.8%) with Comparative Example 1 (elements other than carbon: 5.1%) and Comparative Example 4 (elements other than carbon: 3.3%).

Example 7 (Fe - Ti(10) - Mo(10) / Silica)

A catalyst was similarly obtained as in Example 1, except that silica (CARiACT Q-30 manufactured by Fuji Silysia Chemical Co., Ltd.) was used instead of the transition alumina. The catalyst contained 10 % by mol of Mo and 10 % by mol of Ti relative to the mols of Fe, and the amount of supported Fe was 25 % by mass relative to the mass of the silica.
Carbon fibers were similarly obtained as in Example 1 using the catalyst of this Example. The carbon fibers were tubular in shape and their formed shell had a multilayered wall. Evaluation results are shown in Table 3.

Comparative Example 10 (Fe - Ti(10) / Silica)

A catalyst was similarly obtained as in Comparative Example 3, except that silica (CARiACT Q-30 manufactured by Fuji Silysia Chemical Co., Ltd.) was used instead of the transition alumina. The catalyst contained 10 % by mol of Ti relative to the mols of Fe, and the amount of supported Fe was 25 % by mass relative to the mass of the silica.
Carbon fibers were similarly obtained as in Comparative Example 3 using the catalyst of this Comparative Example. Evaluation results are shown in Table 3.

Comparative Example 11 (Fe - Mo(10) / Silica)

A catalyst was similarly obtained as in Comparative Example 1, except that silica (CARiACT Q-30 manufactured by Fuji Silysia Chemical Co., Ltd.) was used instead of the transition alumina. The catalyst contained 10 % by mol of Mo relative to the mols of Fe, and the amount of supported Fe was 25 % by mass relative to the mass of the silica.

Carbon fibers were similarly obtained as in Comparative Example 1 using the catalyst of this Comparative Example. Evaluation results are shown in Table 3.

Example 8 (Co - V(10) - Mo(10) / Magnesia) (Reference only)

To 1.2 parts by mass of water, 1.24 parts by mass of cobalt (II) nitrate hexahydrate was added and dissolved therein, to which 0.050 part by mass of ammonium metavanadate and 0.075 part by mass of hexaammonium heptamolybdate tetrahydrate were then added and dissolved therein, yielding solution A.

The solution A was added dropwise to 1 part by mass of magnesia (500A manufactured by Ube Material Industries, Ltd.) and mixed therein. After mixing, the mixture was dried under vacuum at 100 °C for 4 hours. After drying, the residue was crushed in a mortar with a pestle to yield a catalyst. The catalyst contained 10 % by mol of V and 10 % by mol of Mo relative to the mols of Co, and the amount of supported Co was 25 % by mass relative to the mass of the magnesia.

The catalyst was weighed and placed on a quartz boat, which was inserted into a tube reactor made from quartz and the reactor was sealed. The inside atmosphere of the tube reactor was replaced with nitrogen gas to raise the temperature of the reactor from ambient temperature to 690 °C over 60 minutes while passing the nitrogen gas through the reactor. The reactor was kept at 690 °C for 30 minutes while the nitrogen was passed therethrough.

The nitrogen gas was switched to a mixed gas A comprising nitrogen gas (100 parts by volume) and hydrogen gas (400 parts by volume) and the mixed gas A was passed through the reactor to perform a reduction reaction for 30 minutes while keeping the temperature at 690 °C. After the reduction reaction, the mixed gas A was switched to a mixed gas B comprising hydrogen gas (250 parts by volume) and ethylene gas (250 parts by volume) and the mixed gas B was passed through the reactor to perform a vapor growing reaction for 60 minutes. The mixed gas B was switched to nitrogen gas to replace the inside atmosphere of the reactor with nitrogen to cool to ambient temperature. The reactor was opened and the quartz boat was taken out. Carbon fibers grown from the catalyst as a nucleator were obtained. The carbon fibers were tubular in shape and their formed shell had a multilayered wall. Evaluation results of the carbon fibers are shown in Table 3.

Example 9 (Co - Cr(10) - Mo(10) / Magnesia)

A catalyst was similarly obtained as in Example 8, except that 0.170 part by mass of chromium (III) nitrate nona-hydrate was used instead of ammonium metavanadate. The catalyst contained 10 % by mol of Mo and 10 % by mol of Cr relative to the mols of Co, and the amount of supported Co was 25 % by mass relative to the mass of the magnesia.

Carbon fibers were similarly obtained as in Example 8 using the catalyst of this Example. The carbon fibers were tubular in shape and the formed shell had a multilayered wall. Evaluation results of the carbon fibers are shown in Table 3.

Comparative Example 12 (Co - Mo(10) / Magnesia)

A catalyst was similarly obtained as in Example 8, except that ammonium metavanadate was not used. The catalyst contained 10 % by mol of Mo relative to the mols of Co, and the amount of supported Co was 25 % by mass relative to the mass of the magnesia.

Carbon fibers were similarly obtained as in Example 8 using the catalyst of this Comparative Example. Evaluation results of the carbon fibers are shown in Table 3.

Comparative Example 13 (Co -V(10) / Magnesia)

A catalyst was similarly obtained as in Example 8, except that hexaammonium heptamolybdate tetrahydrate was not used. The catalyst contained 10 % by mol of V relative to the mols of Co, and the amount of supported Co was 25 % by mass relative to the mass of the magnesia.

Carbon fibers were similarly obtained as in Example 8 using the catalyst of this Comparative Example. Evaluation results of the carbon fibers are shown in Table 3.

Comparative Example 14 (Co - Cr(10) / Magnesia)

A catalyst was similarly obtained as in Example 9, except that hexaammonium heptamolybdate tetrahydrate was not used. The catalyst contained 10 % by mol of Cr relative to the mols of Co, and the amount of supported Co was 25 % by mass relative to the mass of the magnesia.

Carbon fibers were similarly obtained as in Example 9 using the catalyst of this Comparative Example. Evaluation results of the carbon fibers are shown in Table 3.

[Table 3]

Table 3

| | | Ex. | Comp. Ex. | | Ex. | | Comp. Ex. | | |
|---|---|---|---|---|---|---|---|---|---|
| | | 7 | 10 | 11 | 8* | 9 | 12 | 13 | 14 |
| Element(I) | | Fe | Fe | Fe | Co | Co | Co | Co | Co |
| Element(II) | | Ti | Ti | - | V | Cr | - | V | Cr |
| Element(III) | | Mo | - | Mo | Mo | Mo | Mo | - | - |
| Carrier | | Silica | Silica | Silica | Magnesia | Magnesia | Magnesia | Magnesia | Magnesia |
| Weight gain (Times) | | 9.0 | 1.6 | 3.2 | 31.0 | 25.0 | 17.0 | 22.0 | 3.0 |
| Amount of impurities (%) | | | | | | | | | |
| | Elements other than carbon | 9.7 | 53.9 | 26.5 | 2.8 | 3.5 | 5.1 | 3.9 | 28.3 |
| | Elements(I), (II)and(III) | 2.3 | 12.2 | 5.7 | 0.7 | 0.8 | 1.1 | 0.8 | 6.1 |
| | Carrier | 7.4 | 41.7 | 20.8 | 2.2 | 2.7 | 3.9 | 3.0 | 22.2 |
| * Reference only | | | | | | | | | |

As shown in Table 3, the amount of impurities in the carbon fibers of the present invention obtained using the three component catalyst supported on the silica (Example 7) is drastically reduced as compared with the carbon fibers obtained using the two component catalyst supported on the silica (Comparative Examples 10 and 11).

Similarly, it is found that the amount of impurities in the carbon fibers of the present invention obtained using the three component catalyst supported on the magnesia (Examples 8 and 9) is drastically reduced as compared with carbon fibers obtained using the two component catalyst supported on the magnesia (Comparative Examples 12 to 14).

Example 10 (Co - V(10) -Mo(10) / Titania) (Reference only)

A catalyst was similarly obtained as in Example 8, except that titania (SUPER-TITANIA F-6 manufactured by Showa Titanium Co., Ltd.) was used instead of magnesia. The catalyst contained 10 % by mol of V and 10 % by mol of Mo relative to the mols of Co and the amount of supported Co was 25 % by mass relative to the mass of the titania.

Carbon fibers were similarly obtained as in Example 8 using the catalyst of this Example. The carbon fibers were tubular in shape and their formed shell had a multilayered wall. Evaluation results are shown in Table 4.

Example 11 (Co - Cr(10) - Mo(10) / Titania)

A catalyst was similarly obtained as in Example 9, except that titania (SUPER-TITANIA F-6 manufactured by Showa Titanium Co., Ltd.) was used instead of magnesia. The catalyst contained 10 % by mol of Cr and 10 % by mol of Mo relative to the mols of Co, and the amount of supported Co was 25 % by mass relative to the mass of the titania.

Carbon fibers were similarly obtained as in Example 9 using the catalyst of this Example. The carbon fibers were tubular in shape and their formed shell had a multilayered wall. Evaluation results are shown in Table 4.

Comparative Example 15 (Co - Mo(10) / Titania)

A catalyst was similarly obtained as in Comparative Example 12, except that titania (SUPER-TITANIA F-6 manufactured by Showa Titanium Co., Ltd.) was used instead of magnesia. The catalyst contained 10 % by mol of Mo relative to the mols of Co, and the amount of supported Co was 25 % by mass relative to the mass of the titania.

Carbon fibers were similarly obtained as in Comparative Example 12 using the catalyst of this Comparative Example. Evaluation results are shown in Table 4.

Comparative Example 16 (Co - V(10) / Titania)

A catalyst was similarly obtained as in Comparative Example 13, except that titania (SUPER-TITANIA F-6 manufactured by Showa Titanium Co., Ltd.) was used instead of magnesia. The catalyst contained 10 % by mol of V relative to the mols of Co, and the amount of supported Co was 25 % by mass relative to the mass of the titania.

Carbon fibers were similarly obtained as in Comparative Example 13 using the catalyst of this Comparative Example. Evaluation results are shown in Table 4.

Comparative Example 17 (Co - Cr(10) / Titania)

A catalyst was similarly obtained as in Comparative Example 14 except that titania (SUPER-TITANIA F-6 manufactured by Showa Titanium Co., Ltd.) was used instead of magnesia. The catalyst contained 10 % by mol of Cr relative to the mols of Co, and the amount of supported Co was 25 % by mass relative to the mass of the titania.

Carbon fibers were similarly obtained as in Comparative Example 14 using the catalyst of this Comparative Example. Evaluation results are shown in Table 4.

Example 12 (Fe-Ni(100) - V(10) - Mo(10) / Calcium Carbonate)

To 1.2 parts by mass of water, 0.88 part by mass of iron (III) nitrate nonahydrate and 0.63 part by mass of nickel (II) nitrate hexahydrate were added and dissolved therein, to which 0.050 part by mass of ammonium metavanadate and 0.075 part by mass of hexaammonium heptamolybdate tetrahydrate were then added and dissolved therein, yielding solution A.

The solution A was added dropwise to 1 part by mass of calcium carbonate (CS.3N-A30 manufactured by Ube Material Industries, Ltd.) and mixed therein. After mixing, the mixture was dried under vacuum at 100 °C for 4 hours. After drying, the residue was crushed in a mortar with a pestle to yield a catalyst. The catalyst contained 10 % by mol of Mo and 10 % by mol of V relative to the total mols of Fe and Ni, the mole ratio of Fe/Ni was 1/1, and the total amount of Fe and Ni supported on the calcium carbonate was 25 % by mass relative to the mass of the calcium carbonate.

The catalyst was weighed and was placed on a quartz boat, which was inserted into a tube reactor made from quartz and the reactor was sealed. The inside atmosphere of the tube reactor was replaced with nitrogen gas to raise the temperature of the reactor from ambient temperature to 690 °C over 60 minutes while passing the nitrogen gas through the reactor. The reactor was kept at 690 °C for 30 minutes while passing nitrogen through the reactor.

The nitrogen gas was switched to a mixed gas A comprising nitrogen gas (100 parts by volume) and hydrogen gas (400 parts by volume) and the mixed gas A was passed through the reactor to perform a reduction reaction for 30 minutes while keeping the temperature at 690 °C. After the reduction reaction, the mixed gas A was switched to a mixed gas B comprising hydrogen gas (250 parts by volume) and ethylene gas (250 parts by volume) which was passed through the reactor to perform a vapor growing reaction for 60 minutes. The mixed gas B was switched to nitrogen gas to replace the inside atmosphere of the reactor with nitrogen to cool to ambient temperature. The reactor was opened and the quartz boat was taken out. Carbon fibers grown from the catalyst as a nucleator were obtained. The carbon fibers were tubular in shape and their formed shell had a multilayered wall. Evaluation results of the carbon fibers are shown in Table 4.

Comparative Example 18 (Fe-Ni(100) - Mo(10) / Calcium Carbonate)

A catalyst was similarly obtained as in Example 12, except that ammonium metavanadate was not used. The catalyst contained 10 % by mol of Mo relative to the total mols of Fe and Ni, the mole ratio of Fe/Ni was 1/1 and the total amount of Fe and Ni supported on the calcium carbonate was 25 % by mass relative to the mass of the calcium carbonate.

Carbon fibers were similarly obtained as in Example 12 using the catalyst of this Comparative Example. Evaluation results are shown in Table 4.

Comparative Example 19 (Fe-Ni(100) - V(10) / Calcium Carbonate) A catalyst was similarly obtained as in Example 12, except that hexaammonium heptamolybdate tetrahydrate was not used. The catalyst contained 10 % by mol of V relative to the total mols of Fe and Ni, the mole ratio of Fe/Ni was 1/1, and the total amount of Fe and Ni supported on the calcium carbonate was 25 % by mass relative to the mass of the calcium carbonate.

Carbon fibers were similarly obtained as in Example 12 using the catalyst of this Comparative Example. Evaluation results are shown in Table 4.

[Table 4]

Table 4

| | | Ex. | | Comp. Ex. | | | Ex. | Comp. Ex. | |
|---|---|---|---|---|---|---|---|---|---|
| | | 10* | 11 | 15 | 16 | 17 | 12 | 18 | 19 |
| Element(I) | | Co | Co | Co | Co | Co | Fe,Ni | Fe,Ni | Fe,Ni |
| Element(II) | | V | Cr | - | V | Cr | V | - | V |
| Element(III) | | Mo | Mo | Mo | - | - | Mo | Mo | - |
| Carrier | | Tita-nia | Tita-nia | Tita-nia | Tita-nia | Tita-nia | $CaCO_3$ | $CaCO_3$ | $CaCO_3$ |
| Weight gain (Times) | | 25.0 | 20.0 | 14.0 | 9.0 | 4.0 | 28.0 | 10.0 | 8.0 |
| Amount of impurities (%) | | | | | | | | | |
| | Elements other than carbon | 3.5 | 4.4 | 6.2 | 9.4 | 21.2 | 3.1 | 8.6 | 10.6 |
| | Elements(I), (II)and(III) | 0.8 | 1.1 | 1.4 | 2.0 | 4.6 | 0.8 | 2.0 | 2.3 |
| | Carrier | 2.7 | 3.3 | 4.8 | 7.4 | 16.7 | 2.4 | 6.7 | 8.3 |
| * Reference only | | | | | | | | | |

As shown in Table 4, it can be understood that the amount of impurities in the carbon fibers of the present invention obtained using the three component catalyst supported on the titania (Examples 10 and 11) is reduced as compared with the carbon fibers obtained using the two component catalyst supported on the titania (Comparative Examples 15 to 17).

Similarly, it can be seen that the amount of impurities in the carbon fibers of the present invention obtained using the three component catalyst supported on the calcium carbonate (Example 12) is drastically reduced as compared with the carbon fibers obtained using the two component catalyst supported on the calcium carbonate (Comparative Examples 18 and 19).

Example 13 (Co - Cr(10) - Mo(10) / Calcium Carbonate)

A catalyst was similarly obtained as in Example 9, except that calcium carbonate (CS.3N-A30 manufactured by Ube Materials Industries, Ltd.) was used instead of magnesia. The catalyst contained 10 % by mol of Cr and 10 % by mol of Mo relative to the mols of Co, and the amount of supported Co was 25 % by mass relative to the mass of the calcium carbonate.
Carbon fibers were similarly obtained as in Example 9 using the catalyst of this Example. The carbon fibers were tubular in shape and their formed shell had a multilayered wall. Evaluation results are shown in Table 5.

Comparative Example 20 (Co - Mo(10) / Calcium Carbonate)

A catalyst was similarly obtained as in Comparative Example 12, except that calcium carbonate (CS.3N-A30 manufactured by Ube Materials Industries, Ltd.) was used instead of magnesia. The catalyst contained 10 % by mol of Mo relative to the mols of Co, and the amount of supported Co was 25 % by mass relative to the mass of the calcium carbonate.
Carbon fibers were similarly obtained as in Comparative Example 12 using the catalyst of this Comparative Example. Evaluation results are shown in Table 5.
[Table 5]

Table 5

| | | Ex. | Comp. Ex. |
|---|---|---|---|
| | | 13 | 20 |
| Element(I) | | Co | Co |
| Element(II) | | Cr | |
| Element(III) | | Mo | Mo |
| Carrier | | $CaCO_3$ | $CaCO_3$ |
| Weight gain (Times) | | 21.0 | 14.0 |
| Raman R value | | 0.64 | 0.48 |
| Thermal conductivity (W/mK) | | | |
| | 5% | 0.38 | 0.41 |
| Amount of impurities (%) | | | |
| | Elements other than carbon | 4.2 | 6.1 |
| | Elements(I), (II)and(III) | 1.0 | 1.4 |
| | Carrier | 3.2 | 4.8 |

As shown in Table 5, it can be seen that the carbon fibers of the present invention obtained using the three component catalyst supported on calcium carbonate contain a lower amount of impurities while keeping a practically high thermal conductivity.

**Claims**

1. A carbon fiber containing a catalyst, in which the catalyst comprises a combination of the elements Fe-V-Mo, Fe-Ti-Mo, Fe-Cr-W, Fe-V-W, Fe-Ti-W or Co-Cr-Mo supported on a carrier.

2. The carbon fiber according to Claim 1, wherein the amount of elements other than carbon is 10 % by mass or less and the amount of transition metal elements is 2.5 % by mass or less.

3. The carbon fiber according to Claim 1 or 2, wherein the diameter of the fiber is not less than 5 nm and not more than 100 nm.

4. The carbon fiber according to any one of Claims 1 to 3, wherein the carbon fiber is tube-shaped.

5. The carbon fiber according to any one of Claims 1 to 4, wherein the carbon fiber contains a graphite layer, and the length of the graphite layer is not less than 0.02 times and not more than 15 times the diameter of the fiber.

6. The carbon fiber according to any one of Claims 1 to 5, wherein the carbon fiber contains a graphite layer, and the amount of the graphite layer having a length of less than twice the diameter of the fiber is not less than 30 % and not more than 90 %.

7. The carbon fiber according to any one of Claims 1 to 6, wherein the carbon fiber has an R value in Raman spectroscopy analysis of 0.9 or less.

8. The carbon fiber according to any one of claims 1 to 7, wherein the carbon fiber is heat-treated at a temperature of 2000 to 3500 °C.

9. A composite material comprising the carbon fiber according to any one of Claims 1 to 8.

**Patentansprüche**

1. Einen Katalysator enthaltende Kohlenstofffaser, wobei der Katalysator eine von einem Träger getragene Kombination der Elemente Fe-V-Mo, Fe-Ti-Mo, Fe-Cr-W, Fe-V-W, Fe-Ti-W oder Co-Cr-Mo aufweist.

2. Kohlenstofffaser nach Anspruch 1, wobei die Menge der anderen Elemente als Kohlenstoff 10 Massen-% oder weniger und die Menge der Übergangsmetallelemente 2,5 % Massen-% oder weniger ist.

3. Kohlenstofffaser nach Anspruch 1 oder 2, wobei der Durchmesser der Faser nicht weniger als 5 nm und nicht mehr als 100 nm ist.

4. Kohlenstofffaser nach einem der Ansprüche 1 bis 3, wobei die Kohlenstofffaser röhrenförmig ist.

5. Kohlenstofffaser nach einem der Ansprüche 1 bis 4, wobei die Kohlenstofffaser eine Graphitschicht enthält und die Länge der Graphitschicht nicht weniger als das 0,02-fache und nicht mehr als das 15-fache des Durchmessers der Faser ist.

6. Kohlenstofffaser nach einem der Ansprüche 1 bis 5, wobei die Kohlenstofffaser eine Graphitschicht enthält und die Menge der Graphitschicht mit einer Länge von weniger als dem 2-fachen des Durchmessers der Faser nicht weniger als 30 % und nicht mehr als 90 % ist.

7. Kohlenstofffaser nach einem der Ansprüche 1 bis 6, wobei die Kohlenstofffaser einen R-Wert in der Raman-Spektroskopieanalyse von 0,9 oder weniger aufweist.

8. Kohlenstofffaser nach einem der Ansprüche 1 bis 7, wobei die Kohlenstofffaser bei einer Temperatur von 2000 bis 3500°C hitzebehandelt ist.

9. Verbundmaterial, welches die Kohlenstofffaser nach einem der Ansprüche 1 bis 8 enthält.

**Revendications**

1. Une fibre de carbone contenant un catalyseur, dans laquelle le catalyseur comprend une combinaison des éléments Fe-V-Mo, Fe-Ti-Mo, Fe-Cr-W, Fe-V-W, Fe-Ti-W ou Co-Cr-Mo sur un support.

2. La fibre de carbone selon la revendication 1, dans laquelle la quantité d'éléments autres que le carbone est inférieure ou égale à 10% en masse et la quantité de métal de transition est inférieure ou égale à 2.5% en masse.

**3.** La fibre de carbone selon la revendication 1 ou 2, dans laquelle le diamètre de la fibre n'est pas inférieur à 5 nm et n'est pas supérieur à 100 nm.

**4.** La fibre de carbone selon l'une quelconque des revendications 1 à 3, dans laquelle la fibre de carbone est en forme de tube.

**5.** La fibre de carbone selon l'une quelconque des revendications 1 à 4, dans laquelle la fibre de carbone contient une couche de graphite, et la longueur de la couche de graphite n'est pas inférieure à 0,02 fois et n'est pas supérieure à 15 fois le diamètre de la fibre.

**6.** La fibre de carbone selon l'une des quelconques revendications 1 à 5, dans laquelle la fibre de carbone contient une couche de graphite, et la quantité de la couche ayant une longueur inférieure au double du diamètre de la fibre n'est pas inférieure à 30% et n'est pas supérieure à 90%.

**7.** La fibre de carbone selon l'une quelconque des revendications 1 à 6, dans laquelle la fibre de carbone a une valeur R en analyse par spectroscopie Raman inférieure ou égale à 0,9.

**8.** La fibre de carbone selon l'une quelconque des revendications 1 à 7, dans laquelle la fibre de carbone est traitée thermiquement à une température de 2000 à 3500°C.

**9.** Un matériau composite comprenant la fibre de carbone selon l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003205239 A
- US 5707916 A
- WO 200650903 A
- US 6518218 B
- JP 2001080913 A

**Non-patent literature cited in the description**

- **A. OBERLIN et al.** Filamentous growth of carbon through benzene decomposition. *J. Crystal Growth,* 1976, vol. 32, 335-49